(19) Europäisches Patentamt
European Patent Office
Office européen des brevets

(11) **EP 1 643 795 B1**

(12) **EUROPEAN PATENT SPECIFICATION**

(45) Date of publication and mention
of the grant of the patent:
**12.03.2008 Bulletin 2008/11**

(51) Int Cl.:
***H04Q 11/00*** *(2006.01)*

(21) Application number: **04023352.0**

(22) Date of filing: **30.09.2004**

(54) **Method and system for managing a data burst throughput of an optical burst switching (OBS) network**

Verfahren und System zur Verwaltung eines Datenburst-Durchsatzes von einem optischen Netzwerk mit Burstschaltung

Méthode et système pour la gestion du débit de données en rafale d'un réseau optique avec commutation par rafales

(84) Designated Contracting States:
**AT BE BG CH CY CZ DE DK EE ES FI FR GB GR HU IE IT LI LU MC NL PL PT RO SE SI SK TR**

(43) Date of publication of application:
**05.04.2006 Bulletin 2006/14**

(73) Proprietor: **Nokia Siemens Networks GmbH & Co. KG**
**81541 München (DE)**

(72) Inventor: **de Vega Rodrigo, Miguel**
**1200 Woluwe St. Lambert**
**Brussels (BE)**

(56) References cited:
- **KAHEEL A ET AL: "Analytical evaluation of blocking probability in optical burst switching networks" COMMUNICATIONS, 2004 IEEE INTERNATIONAL CONFERENCE ON PARIS, FRANCE 20-24 JUNE 2004, PISCATAWAY, NJ, USA,IEEE, vol. 3, 20 June 2004 (2004-06-20), pages 1548-1553, XP010709607 ISBN: 0-7803-8533-0**
- **BIRMAN A: "Computing approximate blocking probabilities for a class of all-optical networks" IEEE JOURNAL ON SELECTED AREAS IN COMMUNICATIONS IEEE USA, vol. 14, no. 5, June 1996 (1996-06), pages 852-857, XP002316241 ISSN: 0733-8716**
- **MOKHTAR A ET AL: "Adaptive wavelength routing in all-optical networks" IEEE/ACM TRANSACTIONS ON NETWORKING IEEE; ACM USA, vol. 6, no. 2, April 1998 (1998-04), pages 197-206, XP002316242 ISSN: 1063-6692**
- **BARRY R A ET AL: "Models of blocking probability in all-optical networks with and without wavelength changers" IEEE JOURNAL ON SELECTED AREAS IN COMMUNICATIONS IEEE USA, vol. 14, no. 5, June 1996 (1996-06), pages 858-867, XP002316243 ISSN: 0733-8716**

**Description**

The invention relates to optical networks comprising a number of interconnected nodes, where information is transmitted in bursts of data packets between the nodes along pathways.

A key measure of performance in optical networks, particularly, dynamic wavelength routed optical networks, is the blocking probability, or the probability that an incoming connection request will be denied. One source of connection blocking is insufficient network resources. If a route with sufficient capacity cannot be found between the source node and destination node, then the connection request must be blocked. Furthermore, if there are no wavelength converters in the network, then the lightpath for the connection must utilize the same wavelength on each link in the path between the source node and the destination node. If no such wavelength is available, then the connection will be blocked, even if capacity is available.

It is expected that, as network traffic continues to scale up and become more bursty in nature, a higher degree of multiplexing and flexibility will be required at the optical layer. Thus, lightpath establishment will become more dynamic in nature, with connection requests arriving at higher rates, and lightpaths being established for shorter time durations. In such situations, blocking due to conflicting connection requests may become an increasingly significant component of the overall connection blocking probability.

The blocking probability is, thus, perhaps the most important performance parameter for OBS (Optical Burst Switching) networks, since it determines the network throughput. It is therefore very important for the design and management of OBS networks to have a method to calculate the blocking probability at each optical fiber of the OBS network.

Blocking probability in wavelength-routed optical networks has been studied analytically in a number of previous works. See, for example, A. Birman, "Computing Approximate Blocking Probabilities for a Class of All-Optical Networks," IEEE Journal on Selected Areas in Communications, vol. 14, no. 5, pp. 852-857, June 1996; R.A. Barry and P.A. Humblet, "Models of Blocking Probability in All-Optical Networks with and Without Wavelength Changers," IEEE Journal on Selected Areas in Communications, vol. 14, no. 5, pp. 858-867, June 1996; or A. Mokhtar and M. Azizoglu, "Adaptive Wavelength Routing in All- Optical Networks," IEEE/ACM Transactions on Networking vol. 6, no. 2, pp. 197-206, April 1998.

Another well-known formula for calculating the blocking probability is known as the Erlang B formula. In particular, the Erlang B formula is applicable to networks that are described in terms of a Poisson Arrival Process, the inter-arrival time between consecutive data packet arrivals is exponentially distributed. The Erlang B formula is widely known throughout the literature and will not be discussed here in detail.

Problematically, all of the foregoing methods assume that the entire bandwidth of the optical fiber is available to burst transmissions. On the other hand, it is widely known that, due to technological limitations, the optical switches along the burst path must be configured and some signalling information must be processed at the electrical domain in order to send a burst. This takes a time that is in most cases non negligible. During this time, that we shall call the setup time, no information can be sent through the wavelength, that is, it is a dead time. Consequently, not all of the bandwidth of a wavelength is available for burst transmissions. Intuitively seen, this time grows with the frequency of burst transmissions and with the size of the setup time (influenced by technological factors).

The reduction of the available bandwidth due to the setup time increases inevitably the blocking probability. With non-negligible setup times there is likely a big difference between the results provided by the traditional methods and the blocking probabilities measured in a real OBS network. What is lacking in the art is a method, system and apparatus to calculate the blocking probability incorporating the setup times.

OBJECTS & SUMMARY OF THE INVENTION

The main idea of the invention is to calculate the blocking probability based on the setup times owing to the edge nodes. In order to carry this out, the invention introduces and calculates a new concept called the *effective bandwidth.* The effective bandwidth is defined here as the link capacity that is left after removing the setup times for the transmission of each burst. Therefore, the effective bandwidth is a measure of the link capacity which can be really used to transfer information. Based on this, the invention then calculates the *effective wavelength utilization,* defined herein as the percentage of wavelength bandwidth that is being used to transfer bursts relative to the total wavelength bandwidth that can be used for burst transmissions (i.e. removing the setup times). Based on the average effective wavelength utilization, a general method that calculates the blocking probability at each link of an OBS network is provided.

According to the invention there is provided, in one embodiment, a method for managing a data burst throughput of an Optical Burst Switching (OBS) network (100). A setup time is determined based on a probability ($P_i$) that a burst at a core node (102) of the OBS network (100) was sent by an edge node (104a, 104b) coupled to the core node (102). An effective wavelength utilization ($\rho_\lambda$) is determined based on the set up time. The blocking probability (P) for the core node (102) is determined based on the effective wavelength utilization ($\rho_\lambda$) and the data burst is routed using the blocking probability.

The effective wavelength utilization ($\rho_\lambda$) may be determined according to the following equation :

$$\rho_\lambda = \frac{1}{C_\lambda \bullet N_\lambda \bullet \left[\dfrac{1}{b} - \dfrac{t_{setup}}{B}\right]}$$

wherein $C_\lambda$ is the wavelength capacity of the core node 102, $N_\lambda$ is the number of wavelengths of the core node 102, $b$ is the total average throughput at an ingress of the core node 102, $t_{setup}$ is the average setup time corresponding to the edge node 104a, 104b, etc., and $B$ is the average burst size of the core node 102.

There is also provided a system and apparatus for managing a data burst throughput of an Optical Burst Switching (OBS) network (100), including a core node (102) of the OBS network and one or more edge nodes (104a, 104b) connected to the core node (102). The core node 102 is allocated a wavelength based on a blocking probability that is determined using at least the setup time of the one or more edge nodes (104a, 104b) .

The invention may be utilized method has several applications. For instance, the invention could be used in a planning tool, in order to design OBS networks that fulfil a certain maximum allowed blocking probability. It could also be used in OBS edge nodes 104a, 104b, etc. as the core of an Admission Control mechanism that accepts or rejects bursts depending on whether the additional load makes the average blocking probability (or average network throughput) exceed (or lower) a certain limit. It could be used to help a routing algorithm to balance the load, so that all end-to-end paths have approximately the same average blocking probability or throughput. It could be used to help a QoS routing algorithm to route high-priority bursts through lower blocking probability paths.

The invention has a wide variety of applications including, but not limited to, telephone networks, computer networks, optical networks (e.g., optical burst switching network) wireless networks production lines and manufacturing systems and traffic classes. The term "network" as described hereinafter should be interpreted as such. In general the network comprises a number of interconnected nodes (these may be e.g., processors in a telecommunication system), where information flows between the nodes by links, e.g., in packets along wires. The term "pathway" comprises several network nodes joined by links.

BRIEF DESCRIPTION OF THE DRAWINGS

The several figures illustrate at least one example of the invention wherein:

Figure 1 illustrates an optical network model of the present invention; and

Figure 2 illustrates an average path duration of the present invention.

DETAILED DESCRIPTION OF THE PREFERRED EMBODIMENTS

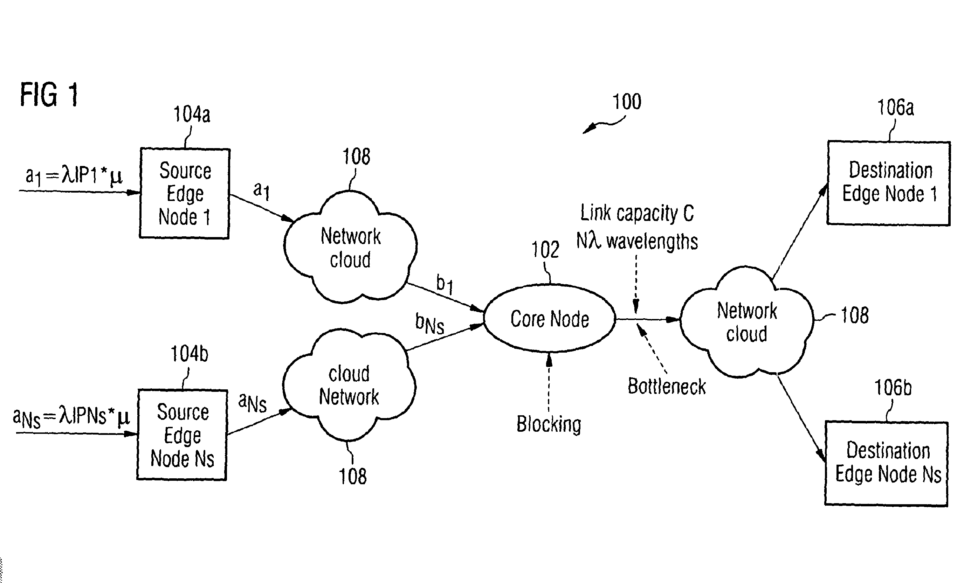

Figure 1 illustrates the analytical model 100 of an OBS Network with non-negligible Setup Times that will be used to discuss the invention. In the figure, a core node 102, one or more edge nodes 104a, 104b, etc. ($N_s$ sources), and destination nodes 106a, 106b, etc. are shown. These elements are connected through links and, possibly, networks 108 intervening. Problematically, a number of edge nodes sending traffic causes a bottleneck 110 at the core node 102. In order to manage this bottleneck 110, it is a first step to determine the average number of new setup requests (header packets) sent per second per wavelength $\lambda_\lambda$ in OBS networks.

A total number of $N_s$ sources 104a, 104b, etc. send information through a common core node 102. In particular, we focus on the traffic from the $N_s$ sources 104a, 104b, etc. that is routed to the same output fiber at the core node 102, which we shall name as the bottleneck link (see figure 1). This output fiber has a capacity $C$ and $N_\lambda$ wavelengths of capacity $C_\lambda$ each $(C = N_\lambda * C_\lambda)$. The average IP packet arrival rate of each source $i$ that is routed through the same output optical fiber at the core node 102 is represented by $\lambda_{IPi}$, and the average IP packet size by $\mu$.

Each burst from each one of the $N_s$ sources 104a, 104b, etc. is carried out by one of the $N_\lambda$ available wavelengths of the output fiber. The mapping between wavelengths and bursts is done according to a wavelength assignment or wavelength scheduling algorithm, which selects the wavelength on which a burst is going to be sent according to some performance criteria. When using such algorithms it can be generally assumed that the load of the $N_s$ traffic sources is equally distributed among the $N_\lambda$ wavelengths of capacity $C_\lambda$. We proceed now to study the output fiber of the core node 102 as drawn in figure 1.

Due to the non-negligible setup times, not all of the capacity from a wavelength of an optical fiber connected at the ingress of the core node 102 in Figure 1 can be used in order to transfer information. The *effective wavelength capacity* accurately describes the wavelength capacity that can be entirely used for data transmission. The capacity for the output optical fiber at the core node 102 in Figure 1 will be calculated according to the invention as follows.

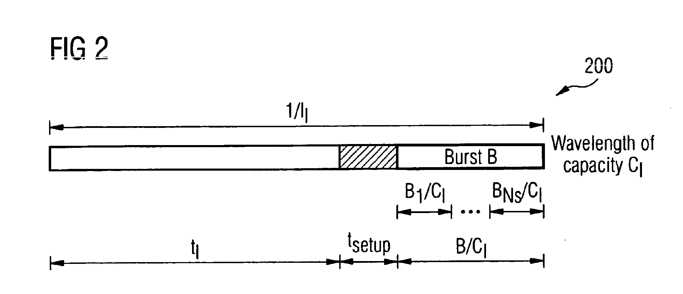

In OBS networks, the average inter-arrival time 200 between consecutive bursts on one of the $\mathbf{N}_\lambda$ wavelengths is equal to $1/\lambda_\lambda$, where $\lambda_\lambda$ is the average burst arrival rate per wavelength, and also the average number of setup requests (header packets) sent per second. This will be best understood from Figure 2 that illustrates the average path duration. The average time $1/\lambda_\lambda$ is filled with the transmission of a burst $\mathbf{B}$ (that lasts $\mathbf{B}/\mathbf{C}_\lambda$ seconds in a wavelength of capacity $C_\lambda$), and with the setup for the next burst. The parameter $\mathbf{N_s}$ represents the number of sources sending information through the wavelength.

It shall be appreciated that, if a wavelength scheduling algorithm is being used, the burst arrival rate $\lambda$ on an optical fiber with $\mathbf{N}_\lambda$ wavelengths can be calculated as the product $N_\lambda{}^*\lambda_\lambda$, since $\lambda_\lambda$ is the burst arrival rate per wavelength. This is given in Equation 1:

$$\lambda = \lambda_\lambda \cdot N_\lambda \qquad\qquad \texttt{equation 1}$$

Moreover, the wavelength scheduling algorithm uniformly distributes the bursts of all sizes among all available wavelengths. This makes the average burst size $\mathbf{B}$ on a certain wavelength equal the average burst size on any other wavelength. Consequently we use no marker for the variable $\mathbf{B}$ since there is no distinction among wavelengths.

Since an edge node neither creates nor destroys information, the average IP packet throughput at its ingress $\lambda_{\mathbf{IPi}}{}^*\mu$ bps equals the average burst throughput at its egress $\lambda^*\mathbf{B}$, where $\lambda_{IPi}$ is the average IP packet arrival rate of the packets aiming at the same output port of the core node 102 and $\mu$ is the average IP packet size. For an edge node 104a, 104b, etc. $i$ we shall name its average IP packet throughput as $\mathbf{a}_i$ (see figure 1). On the other side, blocking may take place in an OBS network. For this reason, not all the throughput $\mathbf{a}_i$ from a certain traffic source $i$ arrives at the core node 102 in figure 1. Bursts from each traffic source travel through a certain section of the OBS network denoted with the term "network cloud" in figure 1, and blocking may take place on each network cloud. Assume that the blocking probability in the network cloud traversed by bursts coming from edge node 104a, 104b, etc. i is $Pb_i$. It is clear then, that the average throughput $\mathbf{b}_i$ at the ingress of the core node 102 in figure 1can be expressed as a function of the average throughput $\mathbf{a}_i$ at the egress of the edge node 104a, 104b, etc. $i$ according to $\mathbf{b}_i = (1-Pb_i)^*a_i = \lambda^*\mathbf{B}$, where $\lambda$ is the average burst arrival rate and $\mathbf{B}$ the average burst size..

Regardless of the aggregation strategy being used at the edge nodes, the probability that a burst in the bottleneck link comes from a given source **i** can be calculated based on the average arrival throughput (aiming at the same output port) of each traffic source $b_i$ measured at the ingress of the core node 102 as set forth in Equation 2:

$$p_i = \frac{b_i}{b} \qquad\qquad \texttt{equation 2}$$

where **b** is the total average throughput at the ingress of the core node 102 that is routed through the bottleneck link of equation 3:

$$b = \sum_{i=1}^{N_s} b_i \qquad\qquad \texttt{equation 3}$$

This throughput is equally shared among the $\mathbf{N}_\lambda$ wavelengths, so that the average burst throughput per wavelength $\mathbf{b}_\lambda$ is equal to $\mathbf{b}_\lambda = b / N_\lambda$.

Based on the concept of $\mathbf{p}_i$, the average burst size $\mathbf{B}$ can be broken down into $\mathbf{B}_i$ with the help of the probabilities $\mathbf{p}_i$ calculated in Equation 4 as follows :

$$B = \sum_{i=1}^{N_s} p_i \cdot B_i \qquad\qquad \text{equation 4}$$

That is, the average burst size is the average burst size of the source 1 with a probability $p_1$, of the source 2 with a probability $p_2$ and so on. The average burst of each edge node 104a, 104b, etc. $B_i$ can be calculated according to its particular aggregation strategy.

According to this, the throughput $b_\lambda$ per wavelength in the bottleneck (Figure 1) can be formulated according to Equation 5 as:

$$b_\lambda = \lambda_\lambda \cdot B \qquad\qquad \text{equation 5}$$

Where $\lambda_\lambda$ is the average number of setup requests (or header packets) sent per second per wavelength. This rate can be expressed as a function of the input parameters as given by Equation 6:

$$\lambda_\lambda = \frac{\sum_{i=1}^{N_s} \lambda_{IP_i} \cdot \mu}{N_\lambda \cdot B} \qquad\qquad \text{equation 6}$$

Where $B$ is given by equation 4.

Note that with the help of equation 1 the average burst arrival rate in the whole optical fiber can be also calculated from $\lambda_\lambda$ in equation 6.

In average we have that $\lambda_\lambda$ bursts per second per end-to-end path (see figure 2) are sent in an OBS network. With each burst a reconfiguration of the optical switches is assumed, and therefore we have $\lambda_\lambda$ new setups per second in average. For each path request $t_{setup}$ seconds are needed in order for the network to configure its optical routers. This sets an upper limit for the *effective wavelength capacity* $BW_\lambda$ available for the transmission of information. Of the wavelength capacity $C_\lambda$, each time a new path setup takes place, $C_\lambda * t_{setup}$ bits of the capacity are wasted, so indeed $_\lambda {}^* t_{setup} {}^* \lambda_\lambda$ bps of the capacity are wasted:

$$BW_\lambda = C_\lambda \cdot \left[1 - t_{setup} \cdot \lambda_\lambda\right] \qquad\qquad \text{equation 7}$$

The same goes for the rest of the wavelengths in the fiber. For each one the average number of new path setups per second $\lambda_\lambda$ can be calculated, and with the setup time the effective wavelength capacity can be calculated. The capacity of the fiber can be calculated adding the effective bandwidth capacities of each wavelength of the fiber.

Now, the Effective Wavelength Utilization and the Effective Link Utilization can be calculated. The average wavelength utilization in the bottleneck link of an end-to-end- path of an OBS network is defined as the average burst throughput on a certain wavelength divided by the wavelength capacity as given by Equation 8.

$$\rho_{OBS} = \frac{bps\ sent\ as\ bursts}{C_\lambda} = \frac{\lambda_\lambda \cdot B}{C_\lambda} \qquad\qquad \text{equation 8}$$

Where the average burst arrival rate $\lambda_\lambda$ is given by equation 6, **B** is the average burst size (equation 4) and $C_\lambda$ the wavelength capacity.

We must now readapt the definition of the average wavelength utilization given by equation 8 to the discussion of the effective wavelength capacity from the section above. Since from the wavelength capacity $C_\lambda$ only a fraction **$BW_\lambda$** can be used due to the setup times, the average of the *effective wavelength utilization* $\rho_\lambda$ is given by:

$$\rho_\lambda = \frac{bps\ sent\ as\ bursts}{BW_\lambda} = \frac{\lambda_\lambda \cdot B}{BW_\lambda} = \frac{1}{C_\lambda \cdot N_\lambda \cdot \left[ \dfrac{1}{b} - \dfrac{t_{setup}}{B} \right]} \qquad \text{equation 9}$$

Where **b** is given in equation 3 and **B** in equation 4 as a function of the input parameters.

The *effective link utilization* $\rho$ is defined as the proportion of bandwidth of a certain optical fiber which can be used for the transmission of information. This can be obtained by considering the amount of burst traffic offered to the link divided by the effective link capacity. The effective link capacity is the addition of the effective wavelength capacities of the wavelengths present in the fiber. If **$N_s$** and **$N_\lambda$** are respectively the number of traffic sources and the number of wavelengths in the fiber, the effective bandwidth utilization is defined in Equation 10 as:

$$\rho = \frac{\lambda \cdot B}{\sum\limits_{i=1}^{N_\lambda} BW_{\lambda_i}} \qquad\qquad \text{equation 10}$$

Where $\lambda$ is the average burst arrival rate for the whole optical fiber and is given by equation 1, and **B** is the average burst size on any given wavelength. If a wavelength scheduling algorithm is equally distributing the load among the different wavelengths, equation 10 and equation 9 are equal. When the effective link utilization is 1, the effective link capacity is loaded up to 100%, and the network reaches saturation.

The existence of a non-negligible setup time increases the blocking probability and thus reduces the network throughput. With the help of the analytical model described we provide a general method in order to quantify this effect to calculate the blocking probability.

Assume there are **$N_s$** edge nodes 104a, 104b, etc. sending traffic through a certain link (the bottleneck link in figure 1). Assume moreover that for a certain link load $\rho$, a certain number of wavelengths per link **$N_\lambda$** and certain traffic parameters $\gamma_1, ..., \gamma_n$ (e.g. variance, Hurst parameter).

The existence of non-negligible setup times increases the link load parameter $\rho$ according to equation 9 and equation 10. We shall denote by $\rho_\lambda$ the modified link load parameter.

Assume that the bursts from each traffic source **i** (i.e. edge node 104a, 104b, etc.) have a different average setup time which we denote as **$t_i$**. The probability **$p_i$** that a burst at the bottleneck link was sent by the edge node 104a, 104b, etc. $p_i$ is given by equation 2. According to this we can calculate the average setup time in the bottleneck link $t_{setup}$ as follows:

$$t_{setup} = \sum_{i=1}^{N_s} p_i \cdot t_i \qquad\qquad \text{equation 11}$$

Thus, based on the foregoing calculated parameters, the blocking probability can be calculated using the known blocking formulae. It is according the to the instant invention recommended to select a blocking formula **P** based on the parameters calculated herein $(\rho, N_\lambda, \gamma_1, -, \gamma_n)$.

A general method for calculating the blocking probability in an OBS network will now be set forth. The method begins by taking into account the average traffic throughput generated from the edge nodes that goes through the first optical core node 102. With this information we calculate the blocking probability $Pb_i$ for each output fiber $i$ of the core node 102 according to the steps presented below. With the blocking probability we calculate the average traffic throughput that goes to the next core node according to $b_i = (1-Pb_i)*a_i$, where $a_i$ is the average incoming throughput that is offered to the output fiber $i$ and $b_i$ is the average outgoing throughput that is really sent through the output fiber $i$.. With this information the blocking probability for each output fiber of the next core node 102 according to the steps presented below, and so on, is calculated.

First, let $N_s$ edge nodes send each a burst throughput of $b_i = \lambda_{IPi}*\mu*(1-Pb_i)$ bps through a certain output fiber of capacity $C_\lambda$ and $N_\lambda$ wavelengths, where $\lambda_{IPi}*\mu$ is the throughput at the IP level, and $Pb_i$ is the blocking probability calculated so far from the edge node to the core node 102. The average burst size of the bursts generated by edge node 104a, 104b, etc. $i$ is $B_i$ and it can be calculated depending on the corresponding aggregation strategy. Second, the total average throughput $b$ at the ingress of the core node 102 that is routed through the bottleneck link according to equation 3 is calculated. Third, the probability $p_i$ that a burst in the bottleneck link comes from a given source $i$ according to equation 2 is calculated. Fourth, the average burst size $B$ in the bottleneck link according to equation 4 is calculated. Fifth, the average setup time $t_{setup}$ from then $N_s$ traffic sources according to equation 11 is calculated. Sixth, the average (effective) wavelength utilization factor $\rho_\lambda$ according to equation 9 is calculated. Finally, this utilization factor is used in the blocking formula $P(\rho_\lambda, N_\lambda, \gamma_1, .., \gamma_n)$ and used to calculate the blocking probability in the bottleneck link $P_j$.

The present invention is advantageous as It is an exact method since no approximations of any kind where made. Another advantage is that the invention is valid for any kind of traffic statistics (e.g. poisson traffic, self-similar traffic). This allows the model to be used in Access as well as in Core Networks. The invention is also easy to implement and to calculate. This makes it suitable for its implementation in OBS edge nodes, OBS core nodes or in planing tools. Additionally, the invention incorporates the notion of multimode optical fibers, allowing for multiple wavelengths in a fiber. The invention gives a clear and quantitative understanding of the factors than influence OBS's performance in terms of blocking probability and throughput. The invention is also compatible with any standard model that calculates the blocking probability in OBS networks and introduces a modification at the average link utilization calculation. With this modification, any method described in the literature can be used including automatically the effect of the non-negligible setup times.

Thus, the inventive develops a way to extend any blocking probability model in the literature for OBS networks in order to incorporate the important case where the setup times are non-negligible. The invention takes into account and quantifies the impact of the setup times on a series of important parameters and measures, such as, Network throughput, Burst arrival rate, Link load and Blocking probability.

**Claims**

1. A method for managing a data burst throughput of an Optical Burst Switching network (100),
   **characterized in**,
   determining an average setup time $t_{setup}$ based on a probability (Pi) that a burst at a core node (102) of the Optical Burst Switching network (100) was sent by an edge node (104n) coupled to the core node (102),
   determining an effective wavelengthcapacity $BW_\lambda$ entirely used for data transmission by deducting from a wavelength capacity $C_\lambda$ a wasted capacity based on an average number of path setups and the average setup time $t_{setup}$,
   determining an effective wavelength utilization $\rho_\lambda$ based on said setup time determined,
   determining a blocking probability P for the core node (102) based on the effective wavelength utilization $\rho_\lambda$, and
   routing the data burst using the blocking probability P determined.

2. The method according to claim 1, wherein the effective wavelength utilization $\rho_\lambda$ is related to an inverse of an total average throughput b at an ingress of the core node (102) less the average setup time $t_{setup}$ relative to an average burst size B.

3. The method according to claim 2, wherein the effective wavelength utilization $\rho_\lambda$ is determined according to the following equation:

$$\rho_\lambda = \frac{1}{C_\lambda \bullet N_\lambda \bullet \left[\dfrac{1}{b} - \dfrac{t_{setup}}{B}\right]}$$

wherein $C_\lambda$ is the wavelength capacity of the core node (102), $N_\lambda$ is the number of wavelengths of the core node (102), $b$ is the total average throughput at an ingress of the core node (102), $t_{setup}$ is the average setup time, and $B$ is the average burst size of the core node (102).

4. The method according to any of the previous claims, wherein the probability $P_i$ that a burst at the core node (102) was sent by an edge node (104n) is based on a comparison between an average throughput at an ingress of the core node (102) and a total average throughput at the ingress.

5. The method according to any of the previous claims, wherein the blocking probability P is based on a certain number of wavelengths per link $N_\lambda$ connecting edge nodes (104n) to the core node (102).

6. The method according to any of the previous claims, wherein the average setup time $t_{setup}$ is calculated from $N_s$

traffic sources $t_{setup} = \sum_{i=1}^{N_s} p_i \cdot t_i$ , wherein $p_i$ is the probability

that a burst comes from a source i, $t_i$ is the setup time of the source i.

7. The method according to any of the previous claims, wherein the effective wavelength utilization $\rho_\lambda$ of a wavelength capacity $C_\lambda$ of the core node (102).

8. The method according to any of the previous claims, wherein the effective wavelength utilization $\rho_\lambda$ is is related to an inverse of a number of wavelengths $N_\lambda$ of the core node (102).

9. The method according to any of the previous claims, further comprising determining an average throughput b at the ingress of the core node by summing an average arrival throughput of each edge node (104n).

10. The method according to claim 9, wherein determining the average throughput b is determined from a summation of an average burst size $B_i$ of each edge node (104n) factored by a probability $p_i$ that corresponding bursts originate from respective edge nodes (104n).

11. The method according to any of the previous claims, wherein determining a total average throughput b is based on a summation of average throughputs $b_i$ of the edge nodes (104n).

12. The method according to claim 11, wherein determining the average throughput $b_i$ that goes to the next core node (102) is based on a blocking probability $Pb_i$ between the edge nodes (104n) and the core node (102).

13. A system for managing a data burst throughput of an Optical Burst Switching network (100) comprising a core node (102) and edge nodes (104n) connected to the core node (102), **characterized in that** the system includes means for : determining a blocking probability P of the core node determined from an average setup time $t_{setup}$ of said edge nodes (104n) and; routing the data burst of the Optical Burst Switching network (100) according to said blocking probability P, said blocking probability P being derived by determining the average setup time $t_{setup}$, based on a probability $P_i$ that a burst at a core node (102) of the Optical Burst Switching network (100) was sent by an edge node (104n) coupled to the core node (102) and its average setup time $t_i$; determining an effective wavelength capacity $BW_\lambda$ entirely used for data transmission by deducting from a wavelength capacity $C_\lambda$ a wasted capacity based on an average number of path setups and the average setup time; determining an effective wavelength utilization $\rho_\lambda$ based on the average set up time, and; determining said blocking probability P for the core node (102) based on the effective wavelength utilization $\rho_\lambda$, and routing the data burst using the blocking probability P determined.

**14.** The system according to claim 13, wherein the average setup time is calculated $t_{setup} = \sum_{i=1} p_i \cdot t_i$ , wherein $p_i$ is the probability that a burst comes from a source i, $t_i$ is the setup time of the source i.

**15.** The system according to claims 14 or 15, wherein the effective wavelength utilization $\rho_\lambda$ is determined according to the following equation :

$$\rho_\lambda = \frac{1}{C_\lambda \bullet N_\lambda \bullet \left[\dfrac{1}{b} - \dfrac{t_{setup}}{B}\right]}$$

wherein $C_\lambda$ is the wavelength capacity of the core node(102), $N_\lambda$ is the number of wavelengths of the core node (102), b is the total average throughput at an ingress of the core node (102), $t_{setup}$ is the average setup time, and B is the average burst size of the core node (102).

**Patentansprüche**

**1.** Verfahren zum Verwalten eines Datenburst-Durchsatzes eines Optical Burst Switching-Netzwerks (100), **gekennzeichnet durch**:

Bestimmen einer durchschnittlichen Einrichtdauer $t_{setup}$ auf der Grundlage einer Wahrscheinlichkeit (Pi), dass ein Burst an einem Kernknoten (102) des Optical Burst Switching-Netzwerks (100) **durch** einen mit dem Kernknoten (102) gekoppelten Randknoten (104n) gesendet wurde,
Bestimmen einer effektiven Wellenlängenkapazität $BW_\lambda$, die vollständig zur Datenübertragung genutzt wird, **durch** Ableiten einer Leerkapazität von einer Wellenlängenkapazität $C_\lambda$ auf der Grundlage einer durchschnittlichen Anzahl von Pfadeinrichtungen und der durchschnittlichen Einrichtdauer $t_{setup}$,
Bestimmen einer effektiven Wellenlängenausnutzung $\rho_\lambda$ auf der Grundlage der bestimmten Einrichtdauer,
Bestimmen einer Blockierwahrscheinlichkeit P für den Kernknoten (102) auf der Grundlage der effektiven Wellenlängenausnutzung $\rho_\lambda$, und
Lenken des Daten-Bursts unter Verwendung der bestimmten Blockierwahrscheinlichkeit P.

**2.** Verfahren nach Anspruch 1, wobei die effektive Wellenlängenausnutzung $\rho_\lambda$ zu einer Inversen eines durchschnittlichen Gesamtdurchsatzes b an einem Eintrittspunkt des Kernknotens (102), abzüglich der durchschnittlichen Einrichtdauer $t_{setup}$ relativ zu einer durchschnittlichen Burst-Größe B, in Beziehung steht.

**3.** Verfahren nach Anspruch 2, wobei die effektive Wellenlängenausnutzung $\rho_\lambda$ gemäß der folgenden Gleichung bestimmt wird:

$$\rho_\lambda = \frac{1}{C_\lambda \bullet N_\lambda \bullet \left[\dfrac{1}{b} - \dfrac{t_{setup}}{B}\right]}$$

wobei $C_\lambda$ die Wellenkapazität des Kernknotens (102) ist, $N_\lambda$ die Anzahl der Wellenlängen des Kernknotens (102) ist, b der durchschnittliche Gesamtdurchsatz an einem Eintrittspunkt des Kernknotens (102) ist, $t_{setup}$ die durchschnittliche Einrichtdauer ist und B die durchschnittliche Burst-Größe des Kernknotens (102) ist.

**4.** Verfahren nach einem der vorangehenden Ansprüche, wobei die Wahrscheinlichkeit $P_i$, dass ein Burst an dem Kernknoten (102) durch einen Randknoten (104n) gesendet wurde, auf einem Vergleich zwischen einem durchschnittlichen Durchsatz an einem Eintrittspunkt des Kernknotens (102) und dem durchschnittlichen Gesamtdurchsatz an dem Eintrittspunkt basiert.

**5.** Verfahren nach einem der vorangehenden Ansprüche, wobei die Blockierwahrscheinlichkeit P auf einer bestimmten Anzahl von Wellenlängen je Verbindung $N_\lambda$, welche die Randknoten (104n) mit dem Kernknoten (102) verbindet, basiert.

**6.** Verfahren nach einem der vorangehenden Ansprüche, wobei die durchschnittliche Einrichtdauer $t_{setup}$ anhand von $N_S$ Verkehrsquellen $t_{setup} = \sum_{i=1}^{N_s} p_i \cdot t_i$ errechnet wird, wobei $p_i$ die Wahrscheinlichkeit ist, dass ein Burst von einer Quelle i stammt, und $t_i$ die Einrichtdauer der Quelle i ist.

**7.** Verfahren nach einem der vorangehenden Ansprüche, wobei die effektive Wellenlängenausnutzung $\rho_\lambda$ einer Wellenlängenkapazität $C_\lambda$ des Kernknotens (102).

**8.** Verfahren nach einem der vorangehenden Ansprüche, wobei die effektive Wellenlängenausnutzung $\rho_\lambda$ zu einer Inversen einer Anzahl von Wellenlängen $N_\lambda$ des Kernknotens (102) in Beziehung steht.

**9.** Verfahren nach einem der vorangehenden Ansprüche, das des Weiteren das Bestimmen eines durchschnittlichen Durchsatzes b an dem Eintrittspunkt des Kernknotens durch Summieren eines durchschnittlichen Ankunftsdurchsatzes jedes Randknotens (104n) enthält.

**10.** Verfahren nach Anspruch 9, wobei das Bestimmen des durchschnittlichen Durchsatzes b anhand einer Summation einer durchschnittlichen Burst-Größe $B_i$ jedes Randknotens (104n) bestimmt wird, faktorisiert durch eine Wahrscheinlichkeit $p_i$, dass entsprechende Bursts von jeweiligen Randknoten (104n) stammen.

**11.** Verfahren nach einem der vorangehenden Ansprüche, wobei das Bestimmen eines durchschnittlichen Gesamtdurchsatzes b auf einer Summation durchschnittlicher Durchsätze $b_i$ der Randknoten (104n) basiert.

**12.** Verfahren nach Anspruch 11, wobei das Bestimmen des durchschnittlichen Durchsatzes $b_i$, der zu dem nächsten Kernknoten (102) geht, auf einer Blockierwahrscheinlichkeit $Pb_i$ zwischen den Randknoten (104n) und dem Kernknoten (102) basiert.

**13.** System zum Verwalten eines Datenburst-Durchsatzes eines Optical Burst Switching-Netzwerks (100), das einen Kernknoten (102) und Randknoten (104n), die mit dem Kernknoten (102) verbunden sind, aufweist, **dadurch gekennzeichnet, dass** das System Mittel enthält zum:

Bestimmen einer Blockierwahrscheinlichkeit P des Kernknotens, die anhand einer durchschnittlichen Einrichtdauer $t_{setup}$ der Randknoten (104n) bestimmt wurde; und Lenken des Daten-Bursts des Optical Burst Switching-Netzwerks (100) entsprechend der Blockierwahrscheinlichkeit P, wobei die Blockierwahrscheinlichkeit P durch Bestimmen der durchschnittlichen Einrichtdauer $t_{setup}$ abgeleitet wird, basierend auf einer Wahrscheinlichkeit $P_i$, dass ein Burst an einem Kernknoten (102) des Optical Burst Switching-Netzwerks (100) durch einen mit dem Kernknoten (102) gekoppelten Randknoten (104n) gesendet wurde, und seiner durchschnittlichen Einrichtdauer $t_i$, Bestimmen einer effektiven Wellenlängenkapazität $BW_\lambda$, die vollständig zur Datenübertragung genutzt wird, durch Ableiten einer Leerkapazität von einer Wellenlängenkapazität $C_\lambda$ auf der Grundlage einer durchschnittlichen Anzahl von Pfadeinrichtungen und der durchschnittlichen Einrichtdauer; Bestimmen einer effektiven Wellenlängenausnutzung $\rho_\lambda$ auf der Grundlage der durchschnittlichen Einrichtdauer, und Bestimmen der Blockierwahrscheinlichkeit P für den Kernknoten (102) auf der Grundlage der effektiven Wellenlängenausnutzung $\rho_\lambda$, und Lenken des Daten-Bursts unter Verwendung der bestimmten Blockierwahrscheinlichkeit P.

**14.** System nach Anspruch 13, wobei die durchschnittliche Einrichtdauer $t_{setup} = \sum_{i=1}^{N_s} p_i \cdot t_i$ errechnet wird, wobei $p_i$ die Wahrscheinlichkeit ist, dass ein Burst von einer Quelle i stammt, und $t_i$ die Einrichtdauer der Quelle i ist.

**15.** System nach den Ansprüchen 14 oder 15, wobei die effektive Wellenlängenausnutzung $\rho_\lambda$ gemäß der folgenden Gleichung bestimmt wird:

$$\rho_\lambda = \cfrac{1}{C_\lambda \bullet N_\lambda \bullet \left[ \cfrac{1}{b} - \cfrac{t_{setup}}{B} \right]}$$

wobei $C_\lambda$ die Wellenlängenkapazität des Kernknotens (102) ist, $N_\lambda$ die Anzahl der Wellenlängen des Kernknotens (102) ist, b der durchschnittliche Gesamtdurchsatz an einem Eintrittspunkt des Kernknotens (102) ist, $t_{setup}$ die durchschnittliche Einrichtdauer ist und B die durchschnittliche Burst-Größe des Kernknotens (102) ist.

**Revendications**

1. Procédé de gestion d'un débit de données en rafales d'un réseau optique à commutation de rafales (100), **caractérisé par**
déterminer un temps d'établissement moyen $t_{setup}$ sur la base d'une probabilité (Pi) qu'une rafale au niveau d'un noeud de noyau (102) du réseau optique à commutation de rafales (100) ait été envoyée par un noeud d'extrémité (104n) couplé au noeud de noyau (102),
déterminer une capacité effective de longueur d'onde $BW_\lambda$ entièrement utilisée pour la transmission de données en déduisant d'une capacité de longueur d'onde $C_\lambda$ une capacité perdue sur la base d'un nombre moyen d'établissements de voies et du temps d'établissement moyen $t_{setup}$,
déterminer une utilisation effective de longueur d'onde $\rho_\lambda$ sur la base dudit temps d'établissement déterminé,
déterminer une probabilité de blocage P pour le noeud de noyau (102) sur la base de l'utilisation effective de longueur d'onde $\rho_\lambda$, et
acheminer la rafale de données en utilisant la probabilité de blocage P déterminée.

2. Procédé selon la revendication 1, dans lequel l'utilisation effective de longueur d'onde $\rho_\lambda$ est liée à un inverse d'un débit moyen total b à une entrée du noeud de noyau (102) moins le temps d'établissement moyen $t_{setup}$ relatif à une taille moyenne de rafales B.

3. Procédé selon la revendication 2, dans lequel l'utilisation effective de longueur d'onde $\rho_\lambda$ est déterminée selon l'équation suivante :

$$\rho_\lambda = \cfrac{1}{C_\lambda \bullet N_\lambda \bullet \left[ \cfrac{1}{b} - \cfrac{t_{setup}}{B} \right]}$$

où $C_\lambda$ est la capacité de longueur d'onde du noeud de noyau (102), $N_\lambda$ est le nombre de longueurs d'onde du noeud de noyau (102), $b$ est le débit moyen total à une entrée du noeud de noyau (102), $t_{setup}$ est le temps d'établissement moyen, et $B$ est la taille moyenne de rafales du noeud de noyau (102).

4. Procédé selon l'une quelconque des revendications précédentes, dans lequel la probabilité $P_i$ qu'une rafale au niveau du noeud de noyau (102) ait été envoyée par un noeud d'extrémité (104n) est basée sur une comparaison entre un débit moyen à une entrée du noeud de noyau (102) et un débit moyen total à l'entrée.

5. Procédé selon l'une quelconque des revendications précédentes, dans lequel la probabilité de blocage P est basée sur un certain nombre de longueurs d'onde par liaison $N_\lambda$ connectant les noeuds d'extrémité (104n) au noeud de noyau (102).

6. Procédé selon l'une quelconque des revendications précédentes, dans lequel le temps d'établissement moyen $t_{setup}$

est calculé à partir de $N_s$ sources de trafic $t_{setup} = \sum_{i=1}^{N_s} p_i \cdot t_i$ , où $p_i$ est la probabilité qu'une rafale provienne d'une source i, $t_i$ est le temps d'établissement de la source i.

7. Procédé selon l'une quelconque des revendications précédentes, dans lequel l'utilisation effective de longueur d'onde $\rho_\lambda$ est un facteur d'une capacité de longueur d'onde $C_\lambda$ du noeud de noyau (102).

8. Procédé selon l'une quelconque des revendications précédentes, dans lequel l'utilisation effective de longueur d'onde $\rho_\lambda$ est liée à un inverse d'un nombre de longueurs d'onde $N_\lambda$ du noeud de noyau (102).

9. Procédé selon l'une quelconque des revendications précédentes, comprenant en outre de déterminer un débit moyen b à l'entrée du noeud de noyau en sommant un débit d'arrivée moyen de chaque noeud d'extrémité (104n).

10. Procédé selon la revendication 9, dans lequel la détermination du débit moyen b est déterminée à partir d'une sommation d'une taille moyenne de rafales $B_i$ de chaque noeud d'extrémité (104n) mise en facteur avec une probabilité $p_i$ que des rafales correspondantes proviennent de noeuds d'extrémité (104n) respectifs.

11. Procédé selon l'une quelconque des revendications précédentes, dans lequel la détermination d'un débit moyen total b est basée sur une sommation de débits moyens $b_i$ des noeuds d'extrémité (104n).

12. Procédé selon la revendication 11, dans lequel la détermination du débit moyen $b_i$ qui va vers le noeud de noyau (102) suivant est basée sur une probabilité de blocage $Pb_i$ entre les noeuds d'extrémité (104n) et le noeud de noyau (102).

13. Système de gestion d'un débit de données en rafales d'un réseau optique à commutation de rafales (100) comprenant un noeud de noyau (102) et des noeuds d'extrémité (104n) connectés au noeud de noyau (102), **caractérisé en ce que** le système inclut des moyens pour :

déterminer une probabilité de blocage P du noeud de noyau déterminée à partir d'un temps d'établissement moyen $t_{setup}$ desdits noeuds d'extrémité (104n) et ; acheminer la rafale de données du réseau optique à commutation de rafales (100) en fonction de ladite probabilité de blocage P,
ladite probabilité de blocage P étant obtenue en déterminant le temps d'établissement moyen $t_{setup}$, sur la base d'une probabilité $P_i$ qu'une rafale au niveau d'un noeud de noyau (102) du réseau optique à commutation de rafales (100) ait été envoyée par un noeud d'extrémité (104n) couplé au noeud de noyau (102) et de son temps d'établissement moyen $t_i$ ;
déterminer une capacité effective de longueur d'onde $BW_\lambda$ entièrement utilisée pour la transmission de données en déduisant d'une capacité de longueur d'onde $C_\lambda$ une capacité perdue sur la base d'un nombre moyen d'établissements de voies et du temps d'établissement moyen ;
déterminer une utilisation effective de longueur d'onde $\rho_\lambda$ sur la base du temps d'établissement moyen, et ;
déterminer ladite probabilité de blocage P pour le noeud de noyau (102) sur la base de l'utilisation effective de longueur d'onde $\rho_\lambda$, et
acheminer la rafale de données en utilisant la probabilité de blocage P déterminée.

14. Système selon la revendication 13, dans lequel le temps d'établissement moyen est calculé

$t_{setup} = \sum_{i=1}^{N_s} p_i \cdot t_i$ où $p_i$ est la probabilité qu'une rafale provienne d'une source i, $t_i$ est le temps d'établissement de la source i.

15. Système selon la revendication 14 ou 15, dans lequel l'utilisation effective de longueur d'onde $\rho_\lambda$ est déterminée selon l'équation suivante :

$$\rho_\lambda = \frac{1}{C_\lambda \bullet N_\lambda \bullet \left[\dfrac{1}{b} - \dfrac{t_{setup}}{B}\right]}$$

où $C_\lambda$ est la capacité de longueur d'onde du noeud de noyau (102), $N_\lambda$ est le nombre de longueurs d'onde du noeud de noyau (102), b est le débit moyen total à une entrée du noeud de noyau (102), $t_{setup}$ est le temps d'établissement moyen, et $B$ est la taille moyenne de rafales du noeud de noyau (102).

FIG 1

$a_1 = \lambda IP1 * \mu$ → Source Edge Node 1 (104a)

$a_1$ → Network cloud (108)

$b_1$ → Core Node (102)

Link capacity C
$N\lambda$ wavelengths

Bottleneck

Blocking

Network cloud (108)

→ Destination Edge Node 1 (106a)

→ Destination Edge Node Ns (106b)

$a_{Ns} = \lambda IPNs * \mu$ → Source Edge Node Ns (104b)

$a_{Ns}$ → cloud Network (108)

$b_{Ns}$ → Core Node

100

EP 1 643 795 B1

# FIG 2

200

$1/l_I$

| | ⧄ | Burst B |

Wavelength of capacity $C_I$

$B_1/C_I$ ... $B_{Ns}/C_I$

$t_I$    $t_{setup}$    $B/C_I$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. BIRMAN.** Computing Approximate Blocking Probabilities for a Class of All-Optical Networks. *IEEE Journal on Selected Areas in Communications,* June 1996, vol. 14 (5), 852-857
- **R.A. BARRY ; P.A. HUMBLET.** Models of Blocking Probability in All-Optical Networks with and Without Wavelength Changers. *IEEE Journalon Selected Areas in Communications,* June 1996, vol. 14 (5), 858-867
- **A. MOKHTAR ; M. AZIZOGLU.** Adaptive Wavelength Routing in All- Optical Networks. *IEEE/ACM Transactions on Networking,* April 1998, vol. 6 (2), 197-206